# EUROPEAN PATENT APPLICATION

(11) **EP 3 051 123 A1**
(43) Date of publication of application: **03.08.2016**
(21) Application number: 15290019.7
(22) Date of filing: 28.01.2015
(51) Int. Cl.: F03B 13/26, F03B 13/06

(54) **METHOD FOR CONTROLLING A TURBINE**

(71) Applicant: ALSTOM Renewable Technologies, 38100 Grenoble (FR)
(72) Inventor: Loiseau, Fabrice, 38360 Sassenage (FR); Laval, Vincent, 38000 Grenoble (FR); Francois, Maryse, 38320 Bresson (FR)
(74) Representative: General Electric Technology GmbH

(57) **Abstract**

This method is for controlling a turbine (2) for a hydraulic power plant comprising at least one reservoir, the turbine (2) comprising a hub (4) having several blades (6). The method including steps consisting in running the turbine (2) in at least two different operating modes including a direct power-generating mode and an indirect power-generating mode, when a flow of water fills the reservoir or when the reservoir is emptied. The method comprises further steps consisting in rotating each blade (6) around a longitudinal axis (X6) of said blade (6) between one of the operating modes and another one of the operating modes, so that the orientation of said blade (6) is changed between these two operating modes according to a predetermined rotation angle, selected amongst several predetermined values corresponding to discrete angular positions of each blade (6).

## Description

### TECHNICAL FIELD OF THE INVENTION

The invention relates to a method for controlling a turbine for a hydraulic power plant.

### BACKGROUND OF THE INVENTION

Hydraulic power plant such as tidal power plants use the force generated by the water level variations to run turbines in order to generate electrical power. In tidal power plants using reservoirs, tidal water is used to fill a reservoir, or basin, which retains water in order to create a head difference with the sea level. The turbines are run in a direct mode (alternatively indirect mode) when the reservoir is emptied and the turbines are run in an indirect mode (alternatively direct mode) when the reservoir is filled with water. In the indirect mode, the water flows through the turbine in a direction opposed to the nominal direction of the turbine.

This invention can be applied to a power plant using several reservoirs. Standard turbines do not provide a satisfactory hydraulic behaviour in indirect mode, because of the standard orientation of the blades on the hubs of the turbines.

The same issue occurs when a hydraulic power plant has to use turbines in direct and indirect pumping modes.

### SUMMARY OF THE INVENTION

The aim of the invention is to provide a new method for controlling a turbine which allows obtaining a better yield in indirect and direct mode.

To this end, the invention concerns a method for controlling a turbine for a hydraulic power plant comprising at least one reservoir, the turbine comprising a hub having several blades, the method including steps consisting in running the turbine in at least two different operating modes including a direct power-generating mode and an indirect power-generating mode, when a flow of water fills the reservoir or when the reservoir is emptied. This method is characterized in that it comprises further steps consisting in rotating each blade around a longitudinal axis of said blade between one of the operating modes and another one of the operating modes, so that the orientation of said blade is changed between these two operating modes according to a predetermined rotation angle, selected amongst several predetermined values corresponding to discrete angular positions of each blade.

Thanks to the invention, the orientation of the blades on the hub of the turbine allows obtaining a better energy production in the different operating modes of the turbine.

According to further aspects of the invention which are advantageous but not compulsory, such a method may incorporate one or several of the following features:
- The discrete angular positions are determined for each operating mode on the basis of the hydraulic conditions in which the hydraulic power plant works.
- The discrete angular positions are comprised in an angular range of 360°.
- The rotations of the blades are operated when the velocity of the water flowing in the turbine is inferior to a threshold value.
- The rotations of the blades are operated when the water height of the reservoir is similar to the water height of a second reservoir of the hydraulic power plant.
- The rotations of the blades are operated when the respective water heights of the two reservoirs are equal.
- The rotations of the blades are operated when a closing device of the hydraulic power plant, which prevents water from flowing from one of the reservoirs to the other, is closed.
- The method consists in controlling a turbine of a hydraulic power plant of the pump storage type, in which the reservoir can be filled with water brought by the sea, whereas the method includes the following steps:
   a) during the emptying of the reservoir in the sea, running the turbine in the direct power-generating mode, or in the indirect generating mode.
   b) during the filling of the reservoir with water brought by the sea, running the turbine in the indirect power generating mode, or in the direct generating mode.
- The method comprises, after step a), a further step consisting in pumping the water contained in the reservoir with the turbine in order to further empty the reservoir.
- The method comprises, after step b), a further step consisting in pumping water coming from the sea side with the turbine in order to further fill the reservoir.

### BRIEF DESCRIPTION OF THE DRAWINGS

The invention will now be explained in reference to the annexed drawings, as an illustrative example. In the annexed drawings:
- figure 1 is a time versus water height chart depicting the method according to the invention, in a first configuration;
- figure 2 is a chart similar to figure 1, for a second embodiment of the invention;
- figure 3 is a perspective view of a turbine with which the invention can be implemented, in a first blade orientation;
- figure 4 is a view similar to figure 3, in a second blade orientation;
- figure 5 is a view from above of the turbine in the configuration of figure 3;
- figure 6 is a view from above of the turbine in the configuration of figure 4.

### DETAILED DESCRIPTION OF SOME EMBODIMENTS

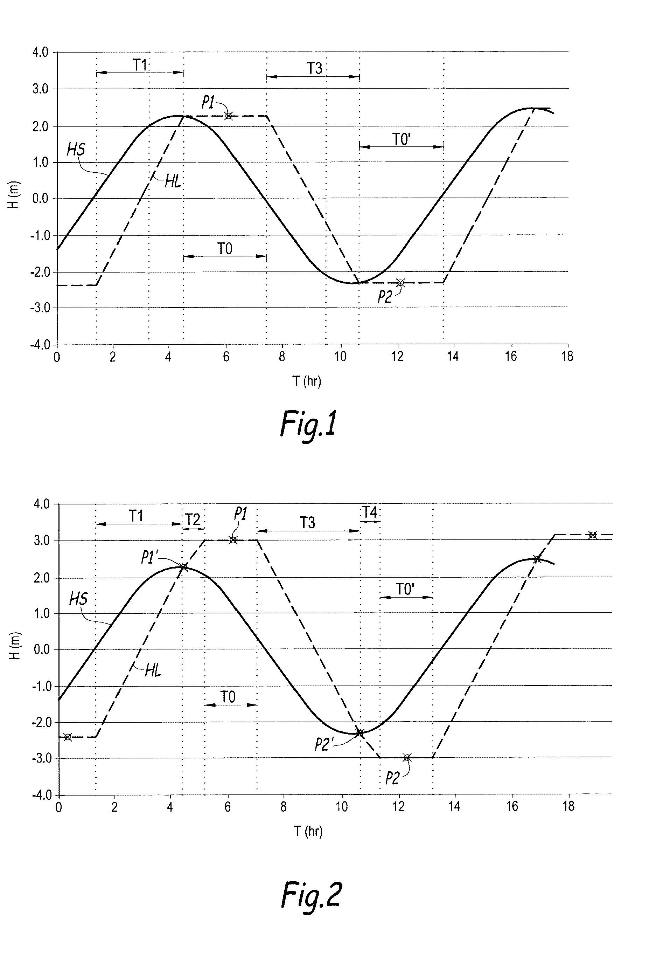

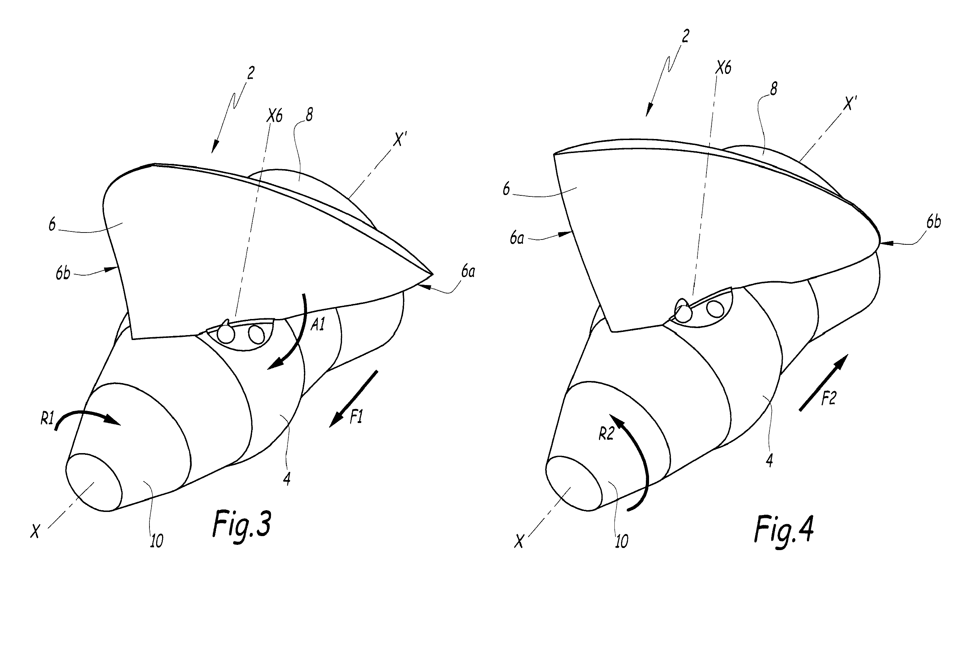

In the embodiment represented on figures 1 to 6, the method of the invention applies to a tidal power plant including a non-shown reservoir filled with tidal water brought by the sea, which can be considered as a second reservoir. This tidal power plant comprises tidal turbines, of the "bulb" type, which generate electrical power while being driven in rotation by the flow of water passing through the turbines. One such turbine is represented on figures 3 to 6, with reference 2.

In such a tidal power plant, as represented on figures 1 and 2, the reservoir is filled with tidal water when the water height HS of the sea increases. The water height HL of the reservoir therefore also increases. During this filling phase, the turbines 2 are run by the water filling the reservoir, as represented by the time interval T1 on figures 1 and 2.

As represented on figure 1, when the tide gets to its highest level, the reservoir is closed so that water is kept inside the reservoir while the sea water height HS decreases. The water which has filled the reservoir is retained during a predetermined time, represented by time interval T0, before being progressively released. When the reservoir is emptied, the turbines 2 are run by the water of the reservoir returning to the sea and generate electrical current during a time interval T3. In the embodiment of figure 1, no pumping operations are operated with the turbines 2.

In an embodiment represented on figure 2, the method applies to a specific type of tidal power plant named pump storage power plant, which involves water pumping operations. When the tide approaches its highest level, tide water is pumped by the turbines 2 in order to fill the reservoir to its highest water level. In this pumping step represented by time interval T2 on figure 2, the turbines 2 are fed with electrical current to draw water inside the reservoir. The reservoir water height HL is higher than the sea water height HS at this moment.

When the tide gets to its lowest level, the reservoir is closed so that no further water gets into the reservoir while the sea water height HS begins to increase again. Water from sea side is prevented from getting in the reservoir during a predetermined time, represented by time interval TO'.

In the embodiment of figure 2, water is pumped out of the reservoir, during a time interval T4, to get the reservoir back at its lowest level, so that the highest possible quantity of water can be filled in the reservoir during the increasing of the sea water height HS. At this time the reservoir water height HL is inferior to the sea water height HS.

Each turbine 2 comprises a hub 4 which bears a determined blade number. Only one blade 6 is represented on figures 3 to 6 for the sake of simplicity. Each turbine 2 comprises a nominal upstream side 8, and a downstream side 10. Each blade 6 comprises a leading edge 6a oriented towards the upstream side 8, and a trailing edge 6b oriented towards the downstream side 10 in the nominal working configuration of turbine 2. Each blade 6 defines a longitudinal axis X6, which is radial with respect to a rotation axis X-X' of the hub 4. The leading edge 6a and the trailing edge 6b are opposed with respect to the longitudinal axis X6.

In the present case, the upstream side 8 of turbine 2 is located on the side of the reservoir, while its downstream side 10 is located on the side of the sea.

Each turbine 2 can be operated in four different modes.

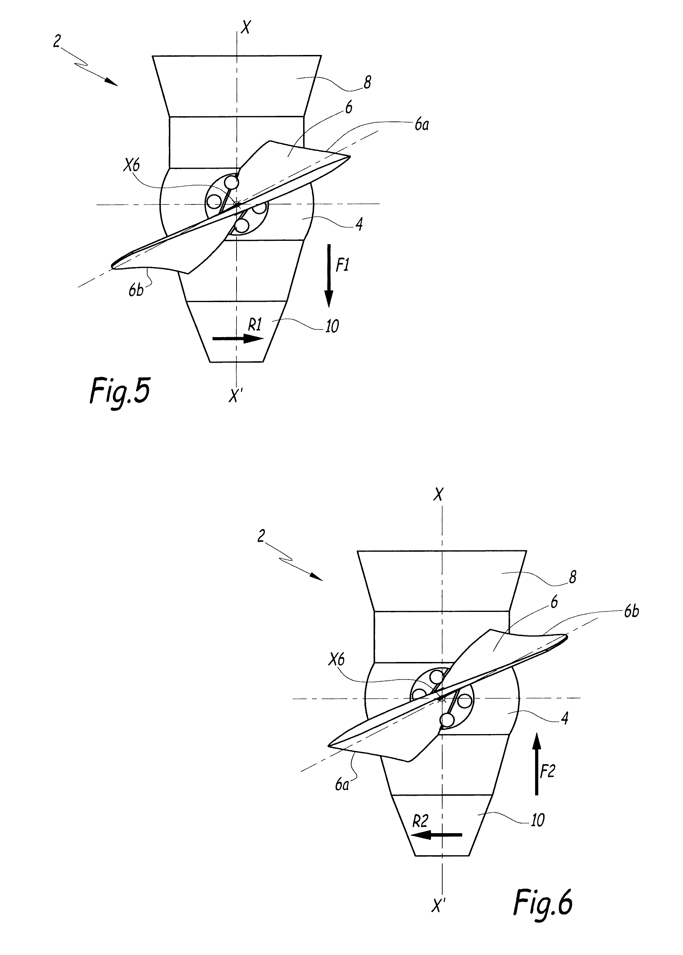

When the hub 4 is rotated by a water flow F1 passing from the upstream side 8 to the downstream side 10, the turbine 2 runs in a direct power-generating mode, or direct turbining, represented on figures 3 and 5. When the hub 4 is rotated by a water flow F2 passing from the downstream side 10 to the upstream side 8, in the opposite direction relative to the direct mode, the turbine 2 runs in an indirect power-generating mode, or indirect turbining.

During the emptying phase of the reservoir, in time interval T3, turbine 2 runs in the direct power-generating mode. During the filling phase of the reservoir, during time interval T1, turbine 2 runs in the indirect power generating mode.

In the embodiment of figure 2, at the end of the emptying phase of the reservoir, turbine 2 runs in an indirect pumping mode, in which water is drawn from the upstream side 8 to the downstream side 10 in order to completely empty the reservoir during time interval T4.

At the end of the filling phase of the reservoir, turbine 2 runs in a direct pumping mode, in which water is drawn from the downstream side 10 to the upstream side 8 in order to complete the filling of the reservoir during time interval T2.

The turbines 2 therefore need to be equally efficient in these four configurations, and to guarantee optimal yield and cavitation conditions.

The method according to the invention therefore comprises steps consisting in rotating each blade 6 around its longitudinal axis X6 between one of the four operating modes and another one of the four operating modes, so that the orientation of each blade 6 is changed between these two operating modes, according to a predetermined rotation angle selected amongst several predetermined values corresponding to discrete angular positions of each blade 6. This means each time the operating mode of the turbine changes, the blades 6 are rotated according to a predetermined angle. The blades 6 can be rotated according to several rotation angles which have a fixed value. These fixed values define the discrete angular positions of the blades 6, which are determined for each operating mode on the basis of the hydraulic conditions in which the tidal power plant works. The word "discrete" means that the positions are fixed by their rotation angle values, and that no other angular positions can be reached between these positions. The blades 6 cannot rotate continuously without stopping in the discrete angular positions.

The discrete angular positions are preferably comprised in an angular range of 360°. In other words, with the discrete angular positions, each blade 6 can cover a complete turn around its longitudinal axis X6.

In the represented example, between the direct turbining period T3 and the indirect pumping period T4, the blades 6 can be rotated at a point P2' and/or at the end of the indirect pumping period T4 during the water retaining phase TO'. The rotation value of blade 6 is between 0° and 360°, so that the blade 6 can reach any predetermined discrete position.

Preferably, a first predetermined rotation of blade 6 by an angle comprised between 150° and 210° or between 60° and 120° can be done at point P2' to have an optimal operation of the pumping mode during period T4. A second predetermined rotation by an angle comprised between -30° and 30° can be done during period T0' or at a point P2 to have an optimal operation of the turbining mode during period T1.

Between the indirect turbining phase T1 and the direct pumping phase T2, the blades 6 can be rotated at a point P1 on figure 2 and/or at the end of the direct pumping phase T2 during the water retaining phase T0. The rotation value of blade 6 is between 0° and 360°.

Preferably, a first predetermined rotation of blade 6 by an angle comprised between 150° and 210° or between 60° and 120° can be done at point P1' to have an optimal operation of the pumping mode during period T2. A second predetermined rotation by an angle comprised between -30° and 30° can be done during period T0 or at a point P1 to have an optimal operation of the turbining mode during period T3.

The angles values given as illustrative examples in these paragraphs are defined by intervals. However, these intervals only define the best value ranges for the optimization of the hydraulic conditions, and do not mean that the rotation of the blades 6 can take any value of these intervals during their rotations. The rotation angles values are set in these intervals once and remain fixed by the mechanical design of the rotation system of each blade 6.

These rotation values depend on specific water flow conditions of the hydraulic power plant, meaning flow and head. These rotations are typically determined thanks to specific tests allowing defining the optimal angular positions of the blade 6 according to the hydraulic performance of the turbine 2 for direct and indirect turbining and for direct and indirect pumping. During the time intervals T3 and T4, the turbine runner 2 rotates around axis X-X' in the direction of arrow R1 on figure 3.

During the time intervals T1 and T2, the turbine runner 2 rotates around axis X-X' in the direction of arrow R2 on figure 4.

As an optional embodiment, between emptying and filling phases of the reservoir, and when the reservoir water heights HL and the sea water height HS are similar, each blade 6 is rotated around its longitudinal axis X6 so that the leading edge 6a and the trailing edge 6b have inverted positions around the longitudinal axis X6. This means that when the turbine 2 needs to be run in indirect power generating mode, the blades 6 are rotated so that the leading edge 6a is oriented towards the downstream side 10, while the trailing edge 6b is oriented towards the upstream side 8. This improves the performances of the turbine 2 in indirect mode.

In this description, the sentence "oriented towards the downstream side or the upstream side" means that the leading or trailing edges 6a and 6b are oriented on the same side as the upstream side 8 or the downstream side 10 with respect to a central transversal plane P1 of the turbine represented on figures 5 and 6.

Turbine 2 is therefore designed so that the blades 6 are rotatable around their longitudinal axis X6 between a first discrete position, represented on figure 3, in which the leading edge 6a is oriented towards the upstream side 8, and a second discrete position, represented on figure 4, in which the leading edge 6a is oriented towards the downstream side 10.

The axial rotations of the blades 6 are preferably operated at the slack tide, i.e. when the sea water height HS and the reservoir water height HL are similar. Alternatively or simultaneously with the slack tide, the axial rotations can be operated when a waterway which closes the passage between the reservoir and the sea is mechanically closed by mobile guide vanes and/or a turbine gate, that is when there is no or reduced water moving between the sea and the reservoir. This permits to operate the axial rotation of the blades 6 at the moment when the hydraulic thrusts and hydraulic torques exerted by water on the blades 6 are at their lowest rate. Mainly friction forces due to the mechanical design of the blades 6 and the hub 4 are exerted on the rotative mechanism of the blades 6 during the axial rotation. This improves durability of the turbine 2 and provides a robust mechanical solution.

The first axial rotation of the blades 6 from their first position to their second position by an angle comprised between 150° and 210° or 60° and 120° is operated clockwise, in the direction of arrow A1 on figure 3, when the blades 6 are observed along a centripetal direction with respect to axis X-X'. Alternatively, the rotation may be operated counterclockwise. This means the leading edge 6a is directly rotated towards the downstream side 10. When the blades 6 must be returned to their first position, the axial rotation is operated preferably in the opposite direction, alternatively in the same direction.

The second axial rotation of the blades 6 from the previous position to the next position by an angle comprised between -30° and 30° is operated clockwise or counter clockwise depending on the rotation angle value.

More generally and according to a non-shown embodiment of the invention, the method of the invention applies to any type of hydraulic power plant comprising at least one reservoir and turbines that need to be run in direct or indirect power generating mode, when a water quantity stored in the reservoir is emptied or when the reservoir is filled with water. To improve the performances of the turbines in these two modes, the blades are rotated around their longitudinal axis so that the blades are in the orientation with respect to the water flow that guarantees the maximum turbining efficiency.

According to an optional embodiment, the turbines of such a hydraulic power plant are also adapted to be run in a direct or indirect pumping mode. When the turbines must be run in these direct or indirect pumping modes, the blades 6 are also rotated so as to guarantee the maximum pumping efficiency.

The rotations of the blades are operated at the moment when the speed of the water flowing in the turbine is inferior to a threshold value, for example a value of 1 m/s, preferably approximately null, allowing to reduce the hydraulic thrust applied on the blades and hydraulic torques applied on the blade axis. This threshold value depends directly on the maximum mechanical torque that can be delivered by the mechanical design of the mechanism allowing performing this rotation.

This moment can correspond to the closing of a device allowing closing a hydraulic passage way of the turbine, for example guide vanes, a sluice gate, a valve or any other closing device which closes the reservoir from which or in which the water that runs the turbines flows. This moment can correspond to the slack tide as mentioned here-above, for the tidal power plant embodiment.

In the case the hydraulic power plant comprises two reservoirs, this moment can correspond to the similarity or the equality of the respective water heights of the two reservoirs. This case applies for example to a tidal power plant, in which one of the reservoirs is formed by the sea, but can also apply to other types of power plants.

The technical features of the above-mentioned embodiments and variants can be combined to form new embodiments of the invention.

## Claims

1. Method for controlling a turbine (2) for a hydraulic power plant comprising at least one reservoir, the turbine (2) comprising a hub (4) having several blades (6), the method including steps consisting in running the turbine (2) in at least two different operating modes including a direct power-generating mode and an indirect power-generating mode, when a flow of water fills the reservoir or when the reservoir is emptied, wherein it comprises further steps consisting in rotating each blade (6) around a longitudinal axis (X6) of said blade (6) between one of the operating modes and another one of the operating modes, so that the orientation of said blade (6) is changed between these two operating modes according to a predetermined rotation angle, selected amongst several predetermined values corresponding to discrete angular positions of each blade (6).

2. Method according to claim 1, the discrete angular positions are determined for each operating mode on the basis of the hydraulic conditions in which the hydraulic power plant works.

3. Method according to one of the previous claims, wherein the discrete angular positions are comprised in an angular range of 360°.

4. Method according to one of the previous claims, where the rotations of the blades (6) are operated when the velocity of the water flowing in the turbine is inferior to a threshold value.

5. Method according to claim 4, wherein the rotations of the blades (6) are operated when the water height of the reservoir is similar to the water height of a second reservoir of the hydraulic power plant.

6. Method according to claim 5, wherein the rotations of the blades (6) are operated when the respective water heights of the two reservoirs are equal.

7. Method according to one of claims 4 to 6, wherein the rotations of the blades (6) are operated when a closing device of the hydraulic power plant, which prevents water from flowing from one of the reservoirs to the other, is closed.

8. Method according to one of the previous claims, wherein it consists in controlling a turbine of a hydraulic power plant of the pump storage type, in which the reservoir can be filled with water brought by the sea, wherein the method includes the following steps:
a) during the emptying of the reservoir in the sea, running the turbine (2) in the direct power-generating mode, or in the indirect generating mode.
b) during the filling of the reservoir with water brought by the sea, running the turbine (2) in the indirect power generating mode, or in the direct generating mode.

9. Method according to claim 8, wherein it comprises, after step a), a further step consisting in pumping the water contained in the reservoir with the turbine (2) in order to further empty the reservoir.

10. Method according to claims 8 and 9, wherein it comprises, after step b), a further step consisting in pumping water coming from the sea side with the turbine (2) in order to further fill the reservoir.
